# EUROPÄISCHE PATENTANMELDUNG

(11) **EP 0 928 892 A1**
(43) Veröffentlichungstag der Anmeldung: **14.07.1999**
(21) Anmeldenummer: 99100323.7
(22) Anmeldetag: 12.01.1999
(51) Int. Cl.: F02M 25/07, F16K 39/02

(54) **Druckkompensiertes Abgasrückführventil**

(30) Priorität: 12.01.1998 DE 19800780
(71) Anmelder: Ranco Incorporated of Delaware, Wilmington, Delaware 19801-1612 (US)
(72) Erfinder: Klipfel, Bernhard, 76187 Karlsruhe (DE); Pelczyk, Alan, 68766 Hockenheim (DE)
(74) Vertreter: HOFFMANN - EITLE

(57) **Zusammenfassung**

Ein Abgasrückführventil (10) ist elektromagnetisch betätigbar und ist an einer Seite mit der Abgasrückführleitung (12) und an der anderen Seite mit der Saugseite (14) eines Motors verbunden. Das Ventil (10) weist einen Ventilstößel (20) und einen Ventilteller (18) auf, und in einem von dem Ventilteller (18) beabstandeten Bereich ist eine mit dem Ventilstößel (20) verbundene Wirkfläche (28) vorgesehen, die zwei Kammern (30, 32) voneinander abgrenzt. Zur Erreichung einer Druckkompensation ist die erste Kammer (30) mit der Saugleitung (14) verbunden, und/oder die zweite Kammer (32) steht mit der Abgasrückführleitung (12) in Verbindung.

## Beschreibung

### Technisches Gebiet

Die Erfindung betrifft ein Abgasrückführ(AGR)-Ventil gemäß dem Oberbegriff des Anspruchs 1. Ein derartiges Ventil ist aus der DE-A-196 07 810 bekannt.

### Stand der Technik

Ein derartiges Ventil ist elektromagnetisch betätigbar und dient der Steuerung der zu der Einlaßseite eines Motors zurückgeführten Abgasmenge. Hierzu ist das AGR-Ventil an einer Seite mit einer Abgasrückführleitung und an der anderen Seite mit einer Saugleitung des Motors verbunden. Zur Steuerung der rückgeführten Abgas ströme weist das Ventil zumindest einen Ventilstößel mit zumindest einem Ventilteller auf, mit dem ein Ventilsitz verschlossen werden kann. Die Steuerung der Abgasmenge erfolgt gegebenenfalls in Abhängigkeit von dem Betriebszustand des Motors und sonstigen Parametern, wie beispielsweise der zugeführten Frischluftmenge.

Aus der DE 44 10 487 C1 ist es darüber hinaus bekannt, bei einem aufgeladenen Motor den in der Saugleitung herrschenden Ladeluftdruck für das Verschließen des Abgasrückführventils bei einem Betriebszustand mit einem hohen Ladeluftdruck zu verwenden. Zu diesem Zweck wird der Ladeluftdruck über eine Steuerleitung zu einer Kammer oberhalb einer Membran geführt, so daß der Ladeluftdruck gegen den auf die andere Seite der Membran wirkenden Umgebungsdruck ein Schließen des Abgasrückführventils bewirkt.

Im allgemeinen ist es für elektromagnetisch betätigte Abgasrückführventile erwünscht, die erforderlichen Stellkräfte zu minimieren und gegebenenfalls auftretende Druckschwankungen auszugleichen. In diesem Zusammenhang ist aus der DE 29 09 768 A1 ein Magnetventil bekannt, bei dem der auf der Druckseite anstehende Druck über eine Vielzahl von Bohrungen zu einer Kammer oberhalb des Ventilkörpers geleitet wird, so daß die auf der Druckseite wirkenden Kräfte ausgeglichen werden, und die Stellkräfte verringert werden können. Die beschriebene Anordnung ist jedoch vergleichsweise kompliziert und ermöglicht darüber hinaus keinen Ausgleich von Druckschwankungen, die sowohl auf der Druck- oder Einlaßseite als auch auf der Auslaßseite wirken können.

Diese Nachteile verbleiben auch bei dem Gegenstand der EP 0 369 090 A1, bei dem durch einen hohlen Ventilstößel ebenfalls ein gewisser Ausgleich der Kräfte gewährleistet wird.

### Darstellung der Erfindung

Angesichts dieser Nachteile der im Stand der Technik bekannten Magnetventile, insbesondere Abgasrückführventile, liegt der vorliegenden Erfindung die Aufgabe zugrunde, ein elektromagnetisch betätigbares Abgasrückführventil zu schaffen, bei dem die Stellkräfte für verschiedenste Motorcharakteristika minimiert werden können, und darüber hinaus die störenden Einflüsse von Druckschwankungen ausgeschaltet werden können.

Die Lösung dieser Aufgabe erfolgt durch ein Abgasrückführventil gemäß dem Anspruch 1.

Demzufolge ist mit dem Ventilstößel in einem von dem Ventilteller beabstandeten Bereich eine Wirkfläche verbunden, die zwei Kammern voneinander abgrenzt. Je nachdem, ob zum Ausgleich der auf das Ventil wirkenden Drücke auf der Abgas- oder der Saugseite des Motors entsprechende Maßnahmen getroffen werden, ist die erste der beiden Kammern mit der Saugleitung und/oder die zweite der beiden Kammern mit der Abgasrückführleitung verbunden.

Dadurch, daß erfindungsgemäß entweder der Abgasdruck oder der Unterdruck der Saugseite oder beide Drücke jeweils entgegengesetzt zu der Richtung, in der sie auf den Ventilteller wirken, auf die erfindungsgemäß vorgesehene weitere Wirkfläche einen Druck ausüben, werden die wirkenden Kräfte jeweils ausgeglichen. Aufgrund der dadurch gewährleisteten Druckkompensation können in sämtlichen Betriebszuständen die für das elektromagnetisch betätigbare Abgasrückführventil erforderlichen Stellkräfte minimiert werden. Ferner wirken jegliche Druckschwankungen, die insbesondere auf der Seite des zurückgeführten Abgases auftreten, in entgegengesetzter Richtung auf die Wirkfläche, so daß diese störenden Einflüsse ausgeschaltet werden können, und die Steuerung exakter erfolgen kann.

Durch die Anordnung einer Wirkfläche in einem von dem Ventilteller entfernten Bereich wird gewissermaßen eine vorteilhafte räumliche Entkopplung des Ventiltellers von der erfindungsgemäßen Wirkfläche erreicht. Hierdurch kann sowohl die Wirkfläche, als auch das die Wirkfläche bildende Bauteil, als auch deren Anbringung etc. individuell und von der Gestaltung des Ventiltellers unabhängig ausgeführt werden.

In besonderen Anwendungsfällen und bei speziellen Motorcharakteristika bietet es Vorteile, wenn sowohl für die Saugseite als auch für die Abgasrückführseite eine Druckkompensation vorgesehen ist. Hierbei ist in vorteilhafter Weise die erste Kammer mit der Saugseite und die zweite Kammer mit der Abgasseite verbunden. Auf diese Weise können die Stellkräfte des Ventils für sämtliche Stellungen minimiert werden.

Zwar ist es beispielsweise aus der DE-OS 23 15 045 für pneumatisch gesteuerte Ventile bekannt, den auf einer Einlaßseite oder auch im Bereich des Ventilsitzes wirkenden Druck zu einer jeweiligen Kammer zu leiten, deren Abgrenzung durch eine Membran erfolgt. Diese Maßnahmen dienen jedoch ausschließlich der Steuerung von pneumatischen Ventilen und sind insofern mit der erfindungsgemäßen Druckkompensation eines elektromagnetisch gesteuerten Ventils nicht vergleichbar.

Vorteilhafte Ausführungsformen der Erfindung sind in den weiteren Ansprüchen beschrieben.

Gemäß einer vorteilhaften Ausführungsform des erfindungsgemäßen Abgasrückführventils befindet sich diejenige Kammer, die vorangehend als erste Kammer bezeichnet wurde, näher am Ventilteller als die zweite Kammer, und das Ventil ist derart ausgebildet, daß sich der Ventilstößel auf die Seite der Saugleitung erstreckt, und daß es gegen den Abgasdruck schließt. Somit drückt in diesem Fall das zurückgeführte Abgas auf die dem Ventilstößel gegenüberliegende Seite des Ventiltellers, so daß in vorteilhafter Weise bei der entsprechenden Ausführungsform eine Druckkompensation durch die Wirkung des Abgasdrucks auf die von dem Ventilteller weiterentfernte zweite Kammer (und somit in entgegengesetzter Richtung zur Richtung des Abgasdrucks) erreicht wird.

Darüber hinaus kann die jeweils andere Kammer mit der Umgebung in Verbindung stehen, um weitere vorteilhafte Wirkungen zur Verringerung der erforderlichen Stellkräfte nutzen zu können. Im Falle einer saugseitigen Druckkompensation, wenn also die erste Kammer mit der Saugleitung in Verbindung steht, bietet es Vorteile, wenn die zweite Kammer mit der Umgebung verbunden ist. Hierdurch unterstützt gewissermaßen der dem Abgasdruck entgegenwirkende Umgebungsdruck das Schließen des Ventils gegen den Abgasdruck. Hierdurch kann eine Verringerung derjenigen Kräfte erreicht werden, die für das Verschließen des Ventils gegen den Abgasdruck erforderlich sind.

In dem alternativen Fall, daß für eine abgasseitige Druckkompensation die zweite Kammer mit der Abgasrückführleitung verbunden ist, ist es in ähnlicher Weise vorteilhaft, wenn die erste Kammer mit der Umgebung in Verbindung steht. Hierdurch kann eine Verringerung der für das Öffnen erforderlichen Kräfte erreicht werden. Dies ist im Fall einer abgasseitigen Druckkompensation von Vorteil, da der Abgasdruck durch die Verbindung mit der zweiten Kammer keine Öffnung des Ventils erzwingt.

Bevorzugt weist im Fall der abgasseitigen Druckkompensation der Ventilstößel eine Axialbohrung auf, über welche die Abgasseite mit der zweiten Kammer in Verbindung steht. Durch diese Maßnahme können sonstige Steuerleitungen, die eine Verbindung zwischen der Abgasseite und der zweiten Kammer herstellen, vermieden werden.

Die auf das Ventil wirkenden Reibungskräfte können vermieden werden, und es kann ein einfacher Aufbau zur Abtrennung der beiden Kammern voneinander erreicht werden, wenn die erfindungsgemäße Wirkfläche durch eine Rollmembran gebildet wird. Diese Rollmembran ist einerseits am Ventilstößel und andererseits in einem festen Teil des Ventils befestigt und bewegt sich mit der Verstellung des Ventilstößels. Die Wirkfläche wird durch die Projektion der Fläche der Rollmembran gebildet, die jeweils zu der einen und der anderen Kammer weist.

Für die Steuerung und Regelung des erfindungsgemäßen Abgasrückführventils ist es von Vorteil, wenn für die Position des Ventilschaftes ein Rückmeldesystem vorgesehen ist. Dieses kann beispielsweise mit einer Steuereinheit verbunden sein, welche die zurückgeführte Abgasmenge anhand geeigneter Daten steuert, die den jeweiligen Betriebszustand des Motors widerspiegeln.

Bevorzugt wird für ein derartiges Rückmeldesystem ein Potentiometer oder ein kontaktloser Sensor verwendet.

### Kurze Beschreibung der Zeichnungen

Nachfolgend wird die Erfindung anhand von beispielhaft in den Zeichnungen dargestellten Ausführungsformen näher erläutert. Es zeigen:
- Fig. 1: eine Schnittdarstellung eines erfindungsgemäßen Abgasrückführventils mit Druckkompensation auf der Saugseite;
- Fig. 2: eine Schnittdarstellung eines erfindungsgemäßen Abgasrückführventils mit Druckkompensation auf der Abgasseite; und
- Fig. 3: eine Schnittdarstellung eines erfindungsgemäßen Abgasrückführventils mit Druckkompensation sowohl auf der Saug- als auch auf der Abgasseite.

### Ausführliche Beschreibung der Zeichnungen

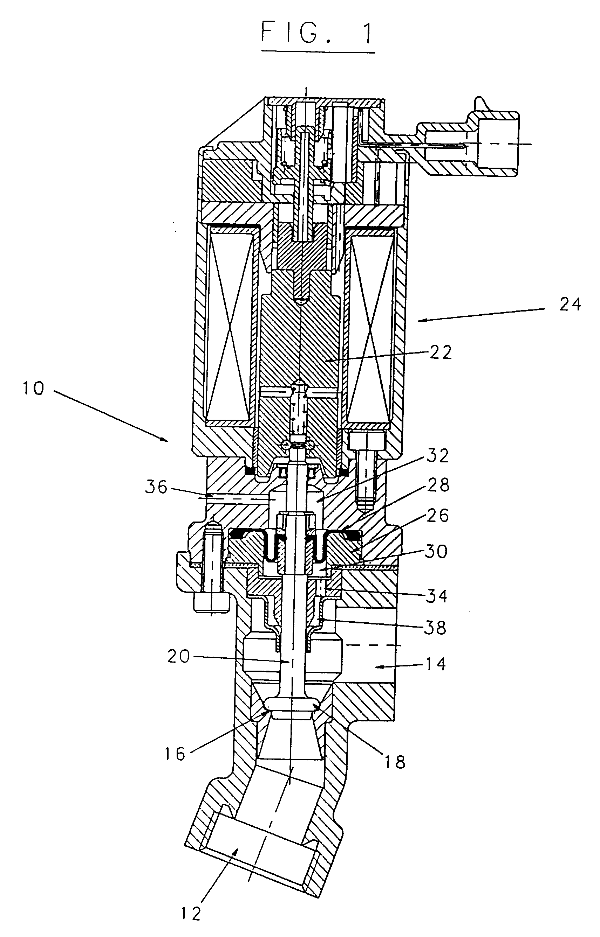

Das in Fig. 1 dargestellte Abgasrückführventil 10 ist an einer Seite mit einer Abgasrückführleitung 12 und an der anderen Seite mit der Saugseite 14 eines Verbrennungsmotors, bevorzugt eines Ottomotors, verbunden. Durch die Versetzung eines mit einem Ventilsitz 16 zusammenwirkenden Ventiltellers 18 wird die durch die Abgasrückführleitung 12 zu der Saugseite 14 des Motors zurückgeführte Abgasmenge gesteuert. Dazu ist der Ventilteller 18 an einem Ventilstößel 20 ausgebildet, der in seinem gemäß Fig. 1 oberen Bereich mit dem Magnetanker 22 einer elektromagnetischen Betätigungseinrichtung 24 verbunden ist.

Um die erfindungsgemäßen Maßnahmen zur Erreichung einer Druckkompensation zu ermöglichen, ist zwischen dem Ventilstößel 20 und einem feststehenden Bereich 26 des Ventils 10 eine Rollmembran 28 angebracht. Mit der Verschiebung des Ventilstößels 20 bewegt sich der an dem Ventilstößel 20 angebrachte Abschnitt der Rollmembran 28 zusammen mit dem Ventilstößel 20. Die sich gemäß der Darstellung von Fig. 1 U-förmig erstreckende ringförmige Schlaufe der Rollmembran 28 wird demzufolge ein wenig nach oben oder unter gerollt, je nachdem in welche Richtung der Ventilstößel 20 verschoben wird. Die in Fig. 1 gezeigte Stellung der Rollmembran 28 entspricht der vollständig geschlossenen Stellung des Ventils 10.

Die in einer Richtung parallel zur Erstreckung des Ventilstößels 20 projizierte Fläche der Rollmembran 28 an deren Unter- und Oberseite bildet die erfindungsgemäße Wirkfläche, die eine erste Kammer 30 und eine zweite Kammer 32 voneinander abgrenzt. Bei dem in Fig. 1 gezeigten Beispiel der Erfindung ist eine Druckkompensation für die Saugseite 14 derart vorgesehen, daß zwischen der Saugseite 14 und der ersten Kammer 30 ein Verbindungsdurchgang 34 vorhanden ist. Hierdurch wirkt der Unterdruck auf der Saugseite 14 nicht nur (gemäß der Darstellung von Fig. 1) auf die Oberseite des Ventiltellers 18, sondern in entgegengesetzter Richtung auf die Unterseite der Rollmembran 28. Die infolge des Unterdrucks der Saugseite 14 auf den Ventilstößel 20 wirkenden Kräfte sind aufgrund der gleichen Größenordnung der Flächen des Ventiltellers 18 und der Unterseite der Rollmembran 28 entgegengesetzt gleich groß und heben sich somit auf, so daß für die Saugseite eine Druckkompensation erreicht wird. Hierdurch können jegliche auf den Betrieb des Ventils störend wirkende Einflüsse, beispielsweise infolge von Druckschwankungen auf der Saugseite, behoben werden.

Bei dem in Fig. 1 gezeigten Ausführungsbeispiel ist die sogenannte zweite Kammer 32 ferner über einen entsprechenden Durchgang 36 mit der Umgebung verbunden. Dieser Verbindungsdurchgang 36 sorgt dafür, daß der Umgebungsdruck von oben auf die Rollmembran wirksam ist und somit dem von unten auf den Ventilteller 18 wirkenden Abgasdruck entgegenwirkt. Hierdurch können die Stellkräfte, die für das Schließen des Ventils erforderlich sind, verringert werden. Es sei noch angemerkt, daß die zweite Kammer 32 im übrigen zu den sonstigen Bestandteilen des Ventils völlig dicht abgeschlossen ist, und daß im unteren Bereich des Ventilstößels 20 ein dünnwandiges Blechbauteil 38 als Verschmutzungsschutz vorgesehen ist, das zu dem Ventilstößel 20 einen hinreichend großen Spalt aufweist, so daß die Verbindung der Saugseite 14 mit der ersten Kammer 30 gewährleistet ist.

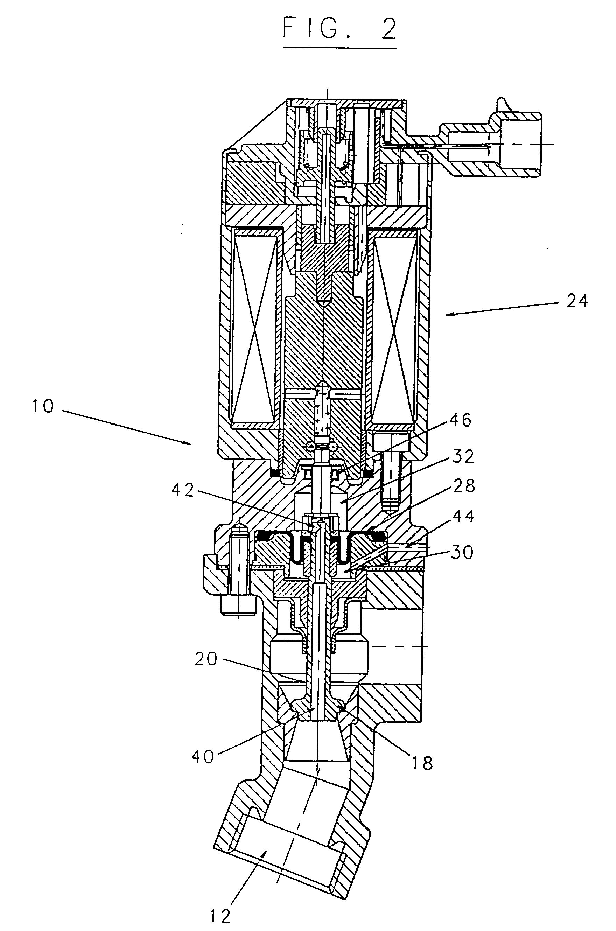

In Fig. 2 ist eine zweite Ausführungsform des erfindungsgemäßen Abgasrückführventils 10 mit Druckkompensation dargestellt. Hinsichtlich seines Aufbaus stimmt die Ausführungsform gemäß Fig. 2 im wesentlichen mit der in Fig. 1 dargestellten Ausführungsform überein. Jedoch ist bei der zweiten Ausführungsform der Erfindung eine Druckkompensation für die Seite der Abgasrückführung vorgesehen. Dies wird dadurch erreicht, daß der Ventilstößel 20 eine Axialbohrung 40 aufweist, die von dem (gemäß der Figur) unteren Rand des Ventiltellers 18 bis zu einem Bereich oberhalb der Rollmembran 28, also im Bereich der zweiten Kammer 32, reicht. Im Bereich der zweiten Kammer steht diese Axialbohrung 40 über eine Radialbohrung 42 mit der zweiten Kammer in Verbindung.

Hierdurch wird erreicht, daß der Abgasdruck, der gemäß der Darstellung in den Figuren von unten auf den Ventilteller 18 wirkt, über die Axialbohrung 40 und die Radialbohrung 42 auch in der zweiten Kammer 32 wirkt. Aus diesem Grund wird auf die mit dem Ventilstößel 20 fest verbundene Rollmembran 28 von oben ein Druck ausgeübt, der aufgrund der weitgehend mit der Fläche des Ventiltellers 18 übereinstimmenden Größe der Wirkfläche an der Rollmembran 28 zu der von unten auf den Ventilteller 18 wirkenden Kraft entgegengesetzt gleich ist. Hierdurch können zum einen die für das Verschließen des Abgasrückführventils von der elektromagnetischen Betätigungseinrichtung 24 aufzubringenden Kräfte erheblich verringert werden. Der von unten auf den Ventilteller 18 wirkende Druck wird gewissermaßen durch seine Einleitung in die zweite Kammer 32 von oben kompensiert.

Dies bietet ferner den Vorteil, daß Druckpulsationen, die insbesondere auf der Seite der Abgasrückführung auftreten können, im offenen Zustand des Ventils kompensiert werden können. Derartige Druckkompensationen beeinflussen nämlich bei geöffnetem Ventil die Stellung des Ventilstößels 20 und des Ventiltellers 18, so daß das Ventil gewissermaßen zittert. Aufgrund der Radialbohrung 42 und der Axialbohrung 40 wirken derartige Druckpulsationen bei dem erfindungsgemäßen Ventil gemäß der Darstellung von Fig. 2 auch von oben über die Rollmembran 28 auf den Ventilstößel 20, so daß derartige störende Einflüsse ausgeglichen oder kompensiert werden können.

Bei der in Fig. 2 dargestellten Ausführungsform ist die erste Kammer 30 ferner über eine Verbindungsbohrung 44 mit der Umgebung verbunden. Hierdurch wirkt der Umgebungsdruck von unten auf die Rollmembran 28, was für die Verringerung der erforderlichen Stellkräfte weitere Vorteile bietet. Im übrigen ist in Übereinstimmung mit der Ausführungsform gemäß Fig. 1 auch bei dem Ausführungsbeispiel, das in Fig. 2 dargestellt ist, für eine vollständige Abdichtung der zweiten Kammer 32 zu den sonstigen Abschnitten des Ventils (mit Ausnahme der beiden Bohrungen 40, 42) gesorgt, wobei bei dem Ausführungsbeispiel von Fig. 2 aufgrund des vergleichsweise hohen Abgasdrucks besondere Maßnahmen, beispielsweise in Form einer Dichtung 46, vorgesehen sind.

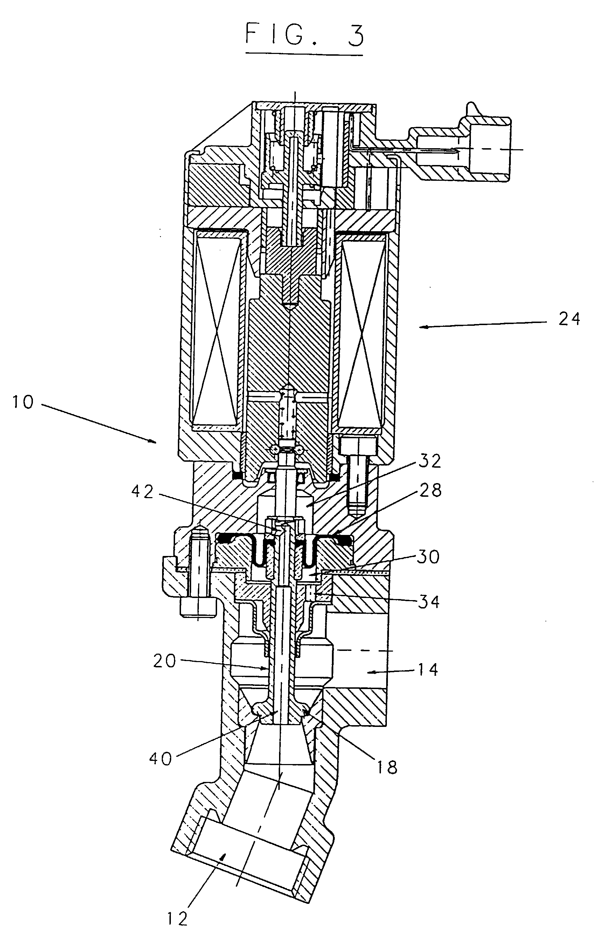

In Fig. 3 ist ein Ausführungsbeispiel des erfindungsgemäßen Abgasrückführventils gezeigt, bei dem sowohl auf der Abgasseite als auch auf der Saugseite für eine Druckkompensation gesorgt ist. Hierbei sind die bei den Ausführungsformen von Fig. 1 und 2 vorgesehenen Maßnahmen gewissermaßen miteinander kombiniert. Zum einen ist in Übereinstimmung mit der Ausführungsform von Fig. 2 der Ventilstößel 20 mit einer von dem Ventilteller 18 bis zum Bereich der zweiten Kammer 32 reichenden Axialbohrung, sowie einer Radialbohrung 42 versehen. Hierdurch wird wie bei der Ausführungsform von Fig. 2 eine Kompensation des von unten auf den Ventilteller 18 wirkenden Abgasdrucks zur Verringerung der Schließkräfte und zum Ausgleich von Druckpulsationen erreicht.

Zum anderen steht wie bei dem Ausführungsbeispiel von Fig. 1 die Saugseite 14 über eine Verbindung 34 mit der ersten Kammer 30 in Verbindung. Hierdurch wirkt wie bei der in Fig. 1 gezeigten Ausführungsform der Unterdruck der Saugseite 14 von unten auf die Rollmembran 28, und somit dem Unterdruck der Saugseite auf die Oberseite des Ventiltellers 18 entgegen. Hierdurch ist eine Kompensation der aufgrund des Unterdrucks auf der Saugseite 14 wirkenden Kräfte gewährleistet. Das gleiche gilt für die Kräfte, die infolge des Abgasdrucks von unten auf den Ventilteller 18 wirken. Diese entfalten ihre Wirkung nämlich aufgrund der Verbindung in Form der Bohrungen 40, 42 auch in der zweiten Kammer 32 und somit von oben auf die Rollmembran 28 und den Ventilstößel 20, so daß auch diese Kräfte ausgeglichen und kompensiert werden, was in vorteilhafter Weise zu geringen Verstellkräften und den genannten Vorteilen im Hinblick auf einen Ausgleich von Druckpulsationen führt.

Selbstverständlich kann das erfindungsgemäße Ventil 10 auch derart gestaltet sein, daß sich der Ventilstößel 20 auf die Seite der Abgasrückführung 12 erstreckt, so daß dementsprechend die erste Kammer, die näher am Ventilteller 18 angeordnet ist, mit der Abgasseite in Verbindung gebracht werden muß, um die wirkenden Kräfte zu kompensieren.

## Patentansprüche

1. Abgasrückführventil,
- das elektromagnetisch betätigbar ist,
- das an einer Seite mit einer Abgasrückführleitung (12) und an der anderen Seite mit der Saugleitung (14) eines Motors verbunden ist, und
- das zumindest einen Ventilstößel (20) mit zumindest einem Ventilteller (18) aufweist,
- bei dem in einem von dem Ventilteller (18) beabstandeten Bereich eine mit dem Ventilstößel (20) verbundene Wirkfläche (28) vorgesehen ist, die zwei Kammern (30, 32) voneinander abgrenzt,
- bei dem zur Erreichung einer Druckkompensation die erste Kammer (30) mit der Saugleitung (14), und die zweite Kammer (32) mit der Abgasrückführleitung (12) in Verbindung bringbar ist,
dadurch **gekennzeichnet**, daß
eine Kammer (30, 32) in Verbindung mit der Saugleitung (14) bzw. der Abgasrückführleitung (12) steht, und daß die andere Kammer (32, 30) mit der Umgebung verbindbar ist.

2. Abgasrückführventil nach Anspruch 1,
dadurch **gekennzeichnet**, daß
die erste Kammer (30) näher an dem Ventilteller (18) angeordnet ist als die zweite Kammer (32), daß sich der Ventilstößel (20) auf die Seite der Saugleitung (14) erstreckt, und daß das Ventil gegen den Abgasdruck schließt.

3. Abgasrückführventil nach zumindest einem der vorangehenden Ansprüche,
dadurch **gekennzeichnet**, daß
ein Rückmeldesystem für die Position des Ventilstößels (20) vorgesehen ist.

4. Abgasrückführventil nach Anspruch 3,
dadurch **gekennzeichnet**, daß
das Rückmeldesystem in Form eines Potentiometers oder eines kontaktlosen Sensors ausgebildet ist.
